# EUROPÄISCHE PATENTSCHRIFT

(11) **EP 3 390 978 B1**
(45) Veröffentlichungstag und Bekanntmachung des Hinweises auf die Patenterteilung: **20.04.2022**
(21) Anmeldenummer: 16809354.0
(22) Anmeldetag: 07.12.2016
(51) Int. Cl.: G01F 1/684, G01F 5/00, G01F 15/18

(54) **LUFTMASSENMESSER**
AIR MASS FLOW METER
APPAREIL DE MESURE DE MASSE D'AIR

(30) Priorität: 16.12.2015 DE 102015225358
(43) Veröffentlichungstag der Anmeldung: 24.10.2018
(73) Patentinhaber: Vitesco Technologies GmbH, 93055 Regensburg (DE)
(72) Erfinder: MILLIES, Thomas, 93049 Regensburg (DE); SCHINDLER, Jörg, 93073 Neutraubling (DE); SETESCAK, Stephen, 93080 Pentling (DE); FRAUENHOLZ, Rainer, 93186 Pettendorf (DE)
(74) Vertreter: Vitesco Technologies
(86) Internationale Anmeldenummer: PCT/EP2016/080082
(87) Internationale Veröffentlichungsnummer: WO 2017/102500

(56) Entgegenhaltungen:
- DE-A1- 4 426 101
- DE-A1- 10 031 879
- DE-B4- 10 031 879
- DE-C2- 4 426 101
- US-A1- 2015 096 360

## Beschreibung

Die Erfindung betrifft einen Luftmassenmesser mit einem Gehäuse, welches einen Luftführungsweg aufweist, in dem ein Luftmassensensorelement angeordnet ist.

Derartige Luftmassenmesser werden beispielsweise in Kraftfahrzeugen zur Ermittlung der von einer Brennkraftmaschine angesaugten Luftmasse verwendet. Auf der Basis einer möglichst zuverlässigen Information über eine angesaugte Luftmasse kann eine Verbrennung durch eine elektronische Steuerung der Brennkraftmaschine dahingehend optimiert werden, dass eine genau auf die Luftmasse abgestimmte Kraftstoffmenge den jeweiligen Brennräumen zugeführt wird. Als Ergebnis wird dadurch eine bessere Energieausnutzung bei verringertem Schadstoffausstoß erzielt.

Aus der DE 44 07 209 A1 ist ein Luftmassenmesser bekannt, der in einen Ansaugkanal zur Bestimmung einer Luftmasse eingesteckt wird, wobei ein definierter Anteil der Gesamtströmung den Luftmassensensor durchströmt. Hierzu ist dieser als Einsteckkanal-Luftmassenmesser ausgebildet. Der Luftmassenmesser umfasst ein in einem Messkanal angeordnetes Sensorelement, eine in einem Gehäuse angeordnete Elektronik zur Auswertung und/oder Erfassung der Messwerte des Sensorelementes sowie einen Auslasskanal jenseits des Sensorelements. Für eine platzsparende Anordnung werden die genannten Kanäle bzw. Luftführungswege U-, S- oder C-förmig ausgebildet, so dass eine insgesamt kompakte, als Einsteckelement ausgebildete, Vorrichtung gebildet wird.

Ein gemäß der Lehre der WO 03/089884 A1 ausgebildeter Luftmassenmesser, der als Heißfilmanemometer ausgebildet ist, hat sich prinzipiell bewährt.

Die DE 100 31 879 A1 betrifft einen Luftmengenmesser mit Heizwiderstand. Dabei sind Rillen, in die ein Klebemittel gegossen wird, auf der Klebefläche eines Sensorelementes ausgebildet. Die Klebefläche ist an eine Oberfläche eines Sensorhalteteils geklebt, was wiederum die Tiefe einer Klebemittelschicht zwischen dem Sensorelement und dem Sensorhalteteil zu Null werden lässt und den Niveauunterschied zwischen den Oberseiten des Sensorelementes und des Sensorhalteteiles beseitigt.

Ferner ist aus der DE 44 26 101 A1 eine Vorrichtung zur Messung der Masse eines strömenden Mediums bekannt. Die darin offenbarte Vorrichtung besitzt einen außerhalb am Gehäuse der Vorrichtung angebrachten Mediumtemperaturwiderstand, um durch einen räumlichen Abstand zum Sensorelement ohne thermische Beeinflussung die Temperatur des strömenden Mediums anzunehmen, so dass die Vorrichtung eine erhöhte Messgenauigkeit und verkürzte Ansprechzeit aufweist.

Bei der Entwicklung moderner Luftmassenmesser, die auf der Grundlage von Sensorelementen arbeiten, die als mikroelektromechanische Systeme (MEMS) ausgebildet sind, hat sich herausgestellt, dass die Messergebnisse, die das Sensorelement liefert, wesentlich von einer sehr genauen Positionierung des Sensorelements im Luftführungsweg abhängen.

Es ist daher eine Aufgabe der Erfindung einen Luftmassenmesser mit einem Sensorelement anzugeben, bei dem das Luftmassensensorelement auf einfachen und kostengünstige Art und Weise hochgenau im Luftführungsweg positioniert ist.

Diese Aufgabe wird durch die Merkmale des unabhängigen Anspruchs gelöst. Vorteilhafte Ausführungsformen sind Gegenstand der abhängigen Ansprüche.

Erfindungsgemäß ist am Gehäuse des Luftmassenmessers ein konisch ausgebildetes Positionierungselement ausgebildet, das in einen Positionierungselementaufnahme eingreift, welche im Sensorelementträger ausgebildet ist, wodurch das Luftmassensensorelement im Luftführungsweg präzise positioniert ist. Alternativ ist erfindungsgemäß am Sensorelementträger ein konisch ausgebildetes Positionierungselement ausgebildet ist, das in einen Positionierungselementaufnahme eingreift, welche im Gehäuse des Luftmassenmessers ausgebildet ist, wodurch das Luftmassensensorelement im Luftführungsweg präzise positioniert ist. Durch die erfindungsgemäßen Merkmale wird eine hoch genaue Positionierung des Luftmassensensorelements im Luftführungsweg des Luftmassenmessers gewährleistet.

Insbesondere liegt der vorliegenden Erfindung der Gedanke zu Grunde, dass das konische Positionierungselement/die Positionierungselementaufnahme an dem Sensorelementträger vorgesehen ist, der wiederum an einem Schaltungsträger befestigt ist. Die Fertigungstoleranzen des Sensorelementträgers sind dabei kleiner als die Fertigungstoleranzen des Schaltungselementträgers, so dass die exakte Positionierung des Sensorelementträgers im Luftführungsweg über den Sensorelementträger und nicht über den Schaltungsträger erfolgt. Somit erfolgt die Positionierung des Sensorelements im Luftführungsweg an demjenigen Bauteil, nämlich dem Sensorelementträger, das kleinere Fertigungstoleranzen aufweist, wodurch die Positionierungsgenauigkeit des Sensorelementträgers und somit auch des Sensorelements im Luftführungsweg verbessert werden kann.

Bei einer Ausgestaltung ist das Positionierungselement einstückig mit dem Gehäuse ausgebildet. Damit kann auf sehr einfache Art das Positionierungselement bei der Herstellung des Gehäuses zum Beispiel als Dorn mit angespitzt werden.

Bei einer alternativen Ausgestaltung ist das Positionierungselement einstückig mit dem Sensorelementträger ausgebildet. Bei der Herstellung des Sensorträgers kann ebenfalls ein dornförmiger Fortsatz als Positionierungselement erzeugt werden.

Bei einer Weiterbildung der Erfindung ist die Positionierungselementaufnahme als Bohrung in dem Sensorelementträger ausgebildet. Alternativ ist die Positionierungselementaufnahme als Bohrung in dem Gehäuse ausgebildet. Bohrungen lassen sich sehr genau platzieren und sind einfach herstellbar.

In einer alternativen Ausgestaltung des erfindungsgemäßen Luftmassenmessers weist das Positionierungselement ferner einen rechteckigen Querschnitt auf. Das Positionierungselement ist somit in der Form eines konischen Vierkants ausgebildet. In einer solchen Ausgestaltung ist es vorteilhaft, wenn die Positionierungselementaufnahme eine Öffnung mit rechteckigem Querschnitt aufweist. Vorzugsweise ergibt sich bei positioniertem Sensorelementträger zwischen dem Positionierungselement und der Positionierungselementaufnahme zumindest teilweise eine Presspassung, wodurch der Sensorelementträger in sämtlichen translatorischen Richtungen positioniert ist. Weitere Merkmale und vorteilhafte Ausbildungen der Erfindung werden nachfolgend unter Beschreibung von Ausführungsbeispielen mit Bezugnahme auf die Abbildungen der Zeichnung angegeben. Über die verschiedenen Abbildungen hinweg werden nachfolgend gleiche Begriffe und Bezugszeichen für gleiche Bauelemente verwendet werden. Dabei zeigt:
- Fig. 1: einen Luftmassenmesser,
- Fig. 2: ein als mikroelektromechanisches System (MEMS) ausgebildetes Sensorelement in einem Luftmassenmesser, der als Einsteckfinger in einem Ansaugrohr integriert ist,
- Fig. 3: einen erfindungsgemäßen Luftmassenmesser,
- Fig. 4: den aus Fig. 3 bekannten Luftmassenmesser aus einer anderen Perspektive,
- Fig. 5: den erfindungsgemäßen Luftmassenmesser mit seinem Gehäuse,
- Fig. 6: ebenfalls den erfindungsgemäßen Luftmassenmesser mit seinem Gehäuse aus einer anderen Perspektive,
- Fig. 7: einen erfindungsgemäßen Luftmassenmesser,
- Fig. 8: den aus Fig. 7 bekannten Luftmassenmesser aus einer anderen Perspektive,
- Fig. 9: den erfindungsgemäßen Luftmassenmesser mit seinem Gehäuse,
- Fig. 10: ebenfalls den erfindungsgemäßen Luftmassenmesser mit seinem Gehäuse aus einer anderen Perspektive.

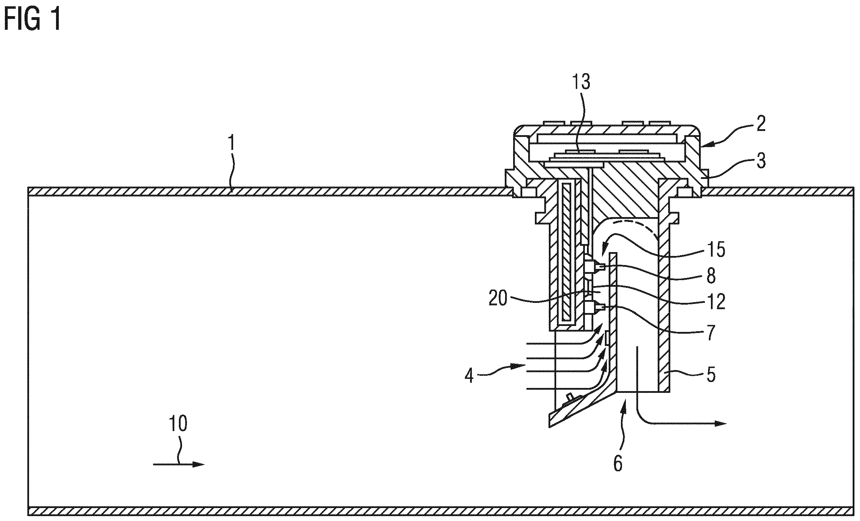

Fig. 1 zeigt einen Luftmassenmesser 2. Der Luftmassenmesser 2 ist als Einsteckfinger ausgebildet, der in ein Ansaugrohr 1 eingesteckt wird und mit dem Ansaugrohr fest verbunden wird. Das Ansaugrohr 1 führt einen Luftmassenstrom 10 hin zu den Zylindern einer hier nicht dargestellten Brennkraftmaschine. Zur effizienten Verbrennung des Treibstoffes in den Zylindern der Brennkraftmaschine ist es notwendig, eine genaue Information über die zur Verbrennung zur Verfügung stehende Luftmasse zu erhalten. Anhand der zur Verfügung stehenden Luftmasse kann auf den verfügbaren Sauerstoff geschlossen werden, der zur Verbrennung des in die Zylinder eingespritzten Kraftstoffes notwendig ist. Darüber hinaus zeigt der Luftmassenmesser 2 in Fig. 1 ein erstes Temperatursensorelement 7 und ein zweites Temperatursensorelement 8. Das erste Temperatursensorelement 7 und das zweite Temperatursensorelement 8 sind an unterschiedlichen Orten im Luftführungsweg 20 angeordnet. Die Temperatursensorelemente 7, 8 werden in der Regel aus Widerständen oder Thermopiles gebildet, die entsprechend der am Temperatursensorelement herrschenden Temperatur unterschiedliche Widerstandswerte annehmen. Zwischen dem ersten Temperatursensorelement 7 und dem zweiten Temperatursensorelement 8 ist ein Heizelement 12 ausgebildet. Der Luftmassenstrom 10, der durch die Einlassöffnung 4 in das Gehäuse 3 des Luftmassenmessers 2 eintritt, überströmt im Luftführungsweg 20 zunächst das erste Temperatursensorelement 7 und dann das Heizelement 12, wonach der Luftmassenstrom 10 das zweite Temperatursensorelement 8 erreicht und entlang des Hilfsrohres 5 zur Auslassöffnung 6 des Luftmassenmessers 2 geleitet wird. Der Luftmassenstrom 10 erreicht das erste Temperatursensorelement 7 mit einer bestimmten Temperatur. Diese Temperatur wird vom ersten Temperatursensorelement 7 erfasst. Danach überstreicht der Luftmassenstrom 10 das Heizelement 12, wobei der Luftmassenstrom 10 je nach vorbeiströmender Masse mehr oder weniger aufgeheizt wird. Wenn der aufgeheizte Luftmassenstrom 10 das zweite Temperatursensorelement 8 erreicht, wird die nun vorliegende Temperatur des Luftmassenstroms 10 mit dem zweiten Temperatursensorelement 8 bestimmt. Aus der Differenz der vom ersten Temperatursensorelement 7 und vom zweiten Temperatursensorelement 8 gemessenen Temperaturen kann die vorbeigeströmte Luftmasse bestimmt werden. Dazu kann der Luftmassenmesser 2 selber einen Schaltungsträger 13 enthalten, der mit elektronischen Bauteilen bestückt ist, die die Messsignale des ersten Temperatursensorelementes 7 und des zweiten Temperatursensorelementes 8 auswertet und, wenn es gewünscht ist, auch weiterverarbeiten können. Die so gewonnene Information über den Luftmassenstrom 10 wird an eine hier nicht dargestellte Motorsteuerung weitergeleitet, das für ein optimales Kraftstoff-Luft-Gemisch in den Zylindern der Brennkraftmaschine sorgen kann.

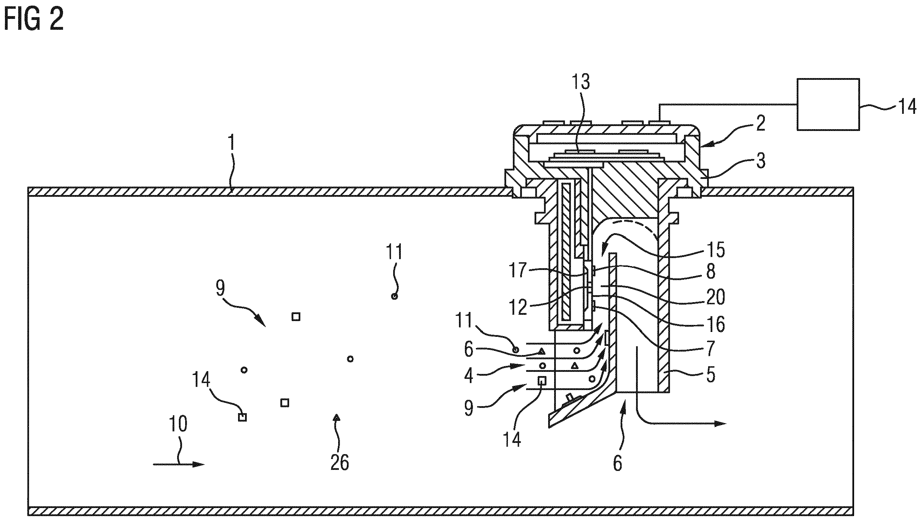

Fig. 2 zeigt das Luftmassensensorelement 15, das als mikroelektromechanisches System (MEMS) ausgebildet ist, in einem Luftmassenmesser 2, der als Einsteckfinger in einem Ansaugrohr 1 integriert ist. Der Luftmassenstrom 10 erreicht auch hier die Einlassöffnung 4 und tritt zunächst in den Luftführungsweg 20 und dann in das Hilfsrohr 5 ein. Auf der Oberfläche 16 einer Membran 17 sind das erste Temperatursensorelement 7 und das zweite Temperatursensorelement 8 im Luftführungsweg 20 zu erkennen. Zwischen dem ersten Temperatursensorelement 7 und dem zweiten Temperatursensorelement 8 ist das Heizelement 12 angeordnet. Der Luftmassenstrom 10 erreicht zunächst das erste Temperatursensorelement 7, überströmt dann das Heizelement 12, um danach das zweite Temperatursensorelement 8 zu erreichen. Das Luftmassensensorelement 15 muss hochgenau im Luftführungsweg 20 angeordnet sein, weil auch geringe Abweichungen von der vorgesehenen Position zu wesentlich verfälschten Messergebnissen führen.

In Fig. 2 ist zudem zu erkennen, dass der Luftmassenstrom 10 auch Verschmutzungen 9 beinhalten kann. Mit dem Luftmassenstrom 10 werden zum Beispiel Wassertröpfchen 26, Öltröpfchen 11 und/oder Staubteilchen 14 hin zum Luftmassenmesser 2 transportiert. Diese Verschmutzungen 9 gelangen durch die Einlassöffnung 4 des Luftmassenmessers 2 bis zum Luftmassensensorelement 15 in dem Luftführungsweg 20. Wenn sich die Verschmutzungen 9 im Bereich des ersten Temperatursensorelementes 7 und des zweite Temperatursensorelementes 8 ablagern, kann es mit der Zeit zu einer massiven Verfälschung des Messwertes für den Luftmassenstrom 10 kommen. Da sich diese Verfälschung durch die Akkumulation der Verschmutzung auf dem Luftmassensensorelement 15 über einem langen Zeitraum immer weiter aufbaut, spricht man in diesem Zusammenhang auch von einer Signaldrift des Luftmassenmessers 2. Diese Signaldrift kann mit einer genauen Positionierung des Luftmassensensorelementes 15 in dem Luftführungsweg 20 zumindest minimiert werden.

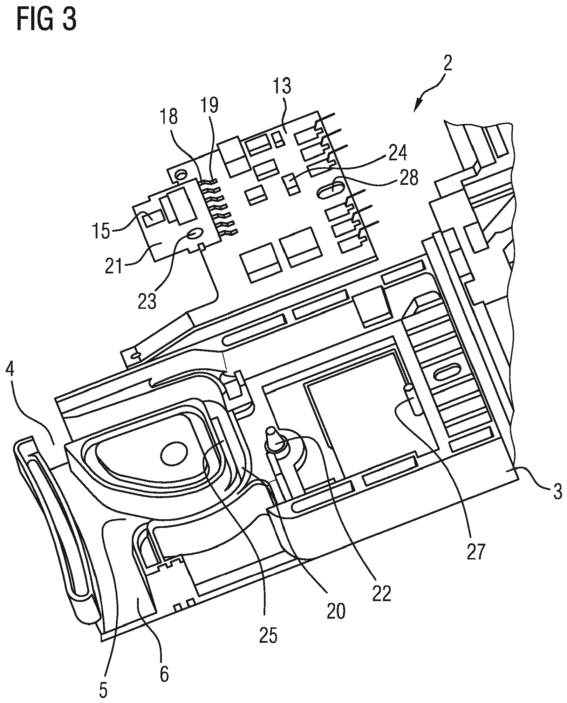

Fig. 3 zeigt einen erfindungsgemäßen Luftmassenmesser 2. Der Luftmassenmesser 2 weist ein Gehäuse auf, das zum Beispiel aus einem Kunststoff im Spritzgussverfahren hergestellt sein kann. Das Gehäuse zeigt eine Einlassöffnung 4, in die ein Luftstrom 10 eindringen kann, wobei ein Teil des eingedrungenen Luftstromes über den Ω-förmig ausgebildeten Bypass strömt und dabei entlang des Luftführungsweges 20 das Luftmassensensorelement 15 überströmt. Über das Hilfsrohr 5 gelangt der am Luftmassensensorelement 15 vorbeigeströmte Luftstrom hin zu Auslassöffnung 6. Im Gehäuse 3 des Luftmassenmessers 2 ist ein Schaltungsträger 13 angeordnet. Der Schaltungsträger 13 kann zum Beispiel als Platine oder Leadframe ausgebildet sein. Auf dem Schaltungsträger 13 sind elektronische Bauelemente 24 angeordnet, die die vom Luftmassensensorelement 15 erzeugten Signale zum Beispiel verstärken und/oder verarbeiten. Dazu ist ein Sensorelementträger 21, an dem das Luftmassensensorelement 15 angebracht ist, beispielsweise mittels eines Vergusses, mit Hilfe von Anschlussdrähten 18 und Anschlusspatts 19 elektrisch mit dem Schaltungsträger 13 verbunden. Auf oder in dem Sensorelementträger 21 ist das Luftmassensensorelement 15 angeordnet. Dieses Luftmassensensorelement 15 muss sehr präzise im Luftführungsweg 20 des Luftmassenmessers 2 angeordnet sein. Zur hochpräzisen Anordnung des Luftmassensensorelementes 15 weist das Gehäuse 3 des Luftmassenmessers 2 ein Positionierungselement 22 auf. Dieses Positionierungselement 22 kann einstückig mit dem Gehäuse 3 des Luftmassenmessers 2 ausgebildet sein. Das Positionierungselement 22 greift in eine Positionierungselementaufnahme 23 ein. Die Positionierungselementaufnahme 23 ist in Fig. 3 als Bohrung im Sensorelementträger ausgebildet. Das Positionierungselement 22 und die Positionierungselementaufnahme 23 gewährleisten eine hochgenaue Positionierung des Luftmassensensorelementes 15 im Luftführungsweg 20. Darüber hinaus ist in Fig. 3 eine Sensorelementträgerauflage 25 zu erkennen, die ebenfalls zur Positionierung des Luftmassensensorelementes 15 im Luftführungsweg 20 dient. Mit Hilfe der drei Elemente Positionierungselement 22, Positionierungselementaufnahme 23 und Sensorelementträgerauflage 25 kann eine äußerst präzise Positionierung des Luftmassensensorelementes 15 in allen drei räumlichen Dimensionen innerhalb des Luftführungsweges 20 erfolgen. Diese hochgenaue Positionierung des Luftmassensensorelementes 15 im Luftführungsweg 20 gewährleistet eine fehlerfreie und genaue Erfassung des Luftmassenstromes durch den Luftmassenmesser 2.

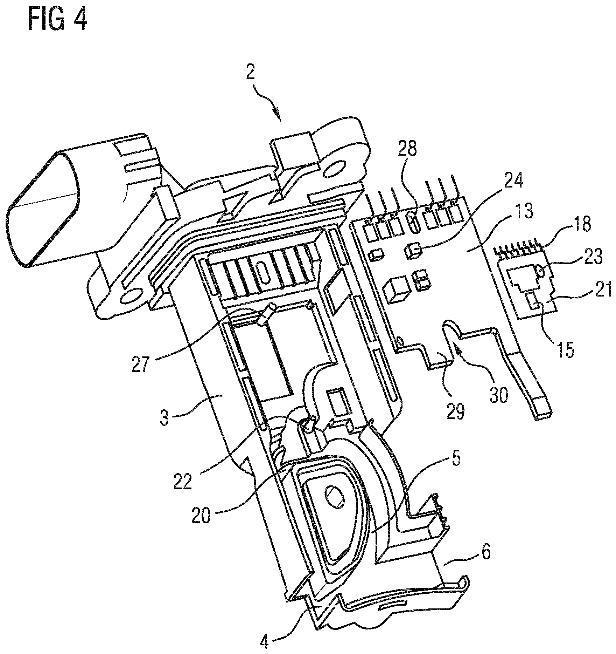

Fig. 4 zeigt den aus Fig. 3 bekannten Luftmassenmesser 2 aus einer anderen Perspektive. Auch hier ist das Gehäuse 3 des Luftmassenmessers zu erkennen, in dem der Schaltungsträger 13 und der Sensorelementträger 21 mit dem Luftmassensensorelement 15 angeordnet sind. In Fig. 4 ist zu den aus Fig. 3 bekannten Merkmalen noch ein Schaltungsträgerpositionierungselement 27 zu erkennen. Dieses Schaltungsträgerpositionierungselement 27 gewährleistet unabhängig von dem Positionierungselement 22 zur Positionierung des Sensorelementträgers 21 eine sichere Positionierung des Schaltungsträgers 13 im Gehäuse 3 des Luftmassenmessers 2. Insbesondere kann mit dem Schaltungsträgerpositionierungselement 27 eine rotatorische Festlegung (Verdrehsicherung) des Schaltungsträgers 13 und somit auch des Sensorelementträger 21 realisiert werden. Der Schaltungsträger 13 und der Sensorelementträger 21 sind elektrisch mit Hilfe von Anschlussdrähten 18 und Anschlusspatts 19 verbunden. Eine direkte mechanische Verbindung des Schaltungsträgers 13 mit dem Sensorelementträger 21 erfolgt nicht. Alternativ kann der Sensorelementträger 21 an dem Schaltungsträger 13 an einem am Schaltungsträger 13 vorgesehenen Befestigungsbereich 29 (siehe Fig. 4) angebracht sein, beispielsweise mittels Kleben Damit das Positionierungselement 22 mit der Positionierungselementaufnahme 23 in Eingriff gelangen kann, weist der Schaltungsträger 13 eine Ausnehmung 30 auf, in der im Montierten Zustand des Sensorelementträgers 21 am Schaltungsträger 13 das Positionierungselement 22 angeordnet ist.

Sowohl der Schaltungsträger 13 als auch der Sensorelementträger 21 sind direkt mit dem Gehäuse 3 des Luftmassenmessers 2 verbunden. Die mechanische Unabhängigkeit des Sensorelementträgers 21 vom Schaltungsträger 13 kann eine hohe Genauigkeit der Positionierung des Luftmassensensorelementes 15 im Luftführungsweg 20 ermöglichen. Dies liegt vor allem daran, dass der Schaltungsträger 13 in der Regel als printed circle board oder Leadframe ausgebildet ist, wobei beide Ausgestaltungen des Schaltungsträgers 13 hohe mechanische Toleranzen aufweisen, die im Bereich von mehreren 100 µm liegen Der Sensorelementträger 21 hingegen ist als hochpräzises Bauteil ausgeführt und damit entsprechend teuer. Der Sensorelementträger 21 weist gegenüber dem Schaltungselementträger viel kleinere mechanische Toleranzen auf, die im Bereich von 10 µm liegen Da lediglich der Sensorelementträger 21 für die Positionierung des Luftmassensensorelementes 15 von Bedeutung ist, kann beim Schaltungsträger 13 mit vergleichsweise kostengünstigen Elementen gearbeitet werden. Dies führt zu einer kostengünstigen Gestaltung des Luftmassenmessers 2, wobei die eine extrem hohe Messgenauigkeit des Luftmassenmessers 2 erhalten bleibt.

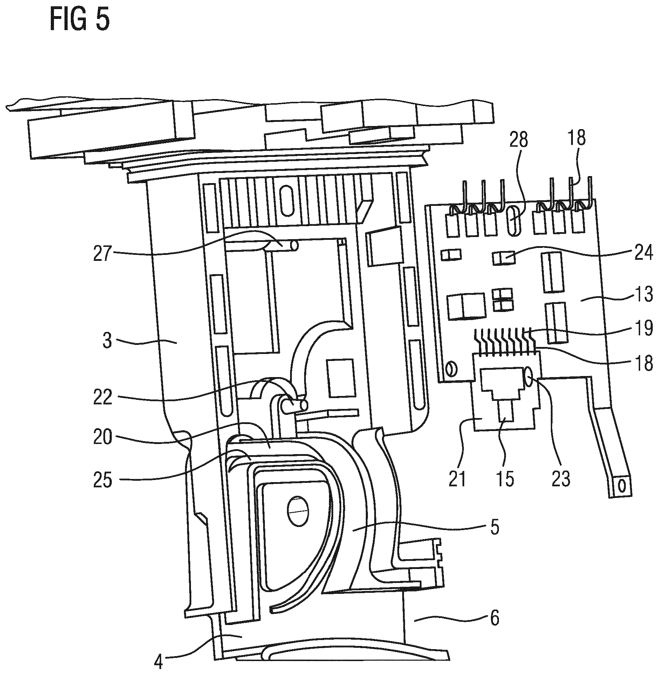

Auch Fig. 5 zeigt den erfindungsgemäßen Luftmassenmesser 2 mit seinem Gehäuse 3 und dem Schaltungsträger 13. Auf dem Schaltungsträger 13 sind elektronische Bauelemente 24 angeordnet, die zur Verarbeitung der Signale vom Luftmassensensorelement 15 dienen. Der Schaltungsträger 13 ist elektrisch mit Hilfe von Anschlusspatts 19 und Anschlussdrähten 18 mit dem auf dem Sensorelementträger 22 angeordneten Luftmassensensorelement 15 verbunden. Eine direkte mechanische Verbindung zwischen dem Luftmassensensorelement 15 und dem Schaltungsträger 13 besteht nicht. Die Positionierung des Luftmassensensorelementes 15 im Luftführungsweg 20 erfolgt wiederum mit Hilfe des Positionierungselementes 22, das in eine Positionierungselementaufnahme 23 eingreift. Das Positionierungselement 22 ist in diesem Beispiel als Dorn am Gehäuse 3 des Luftmassenmessers 2 ausgebildet. Die Positionierungselementaufnahme 23 ist in diesem Beispiel als Bohrung im Sensorelementträger 21 ausgebildet. Es ist aber ebenso gut denkbar, dass das Positionierungselement 22 zum Beispiel als Dorn am Sensorelementträger 21 ausgebildet ist, welcher in eine Positionierungselementaufnahme 23 eingreift, die als Bohrung im Gehäuse 3 des Luftmassenmessers 2 ausgebildet ist. Die Positionierungselementaufnahme 23 lässt sich mit sehr hoher Präzision als Bohrung herstellen. Derartige Bohrungen sind einfach und kostengünstig anzufertigen. Das Positionierungselement 22 kann einstückig entweder mit dem Gehäuse 3 des Luftmassenmessers 2 ausgebildet sein oder einstückig mit dem Sensorelementträger 21 ausgebildet sein.

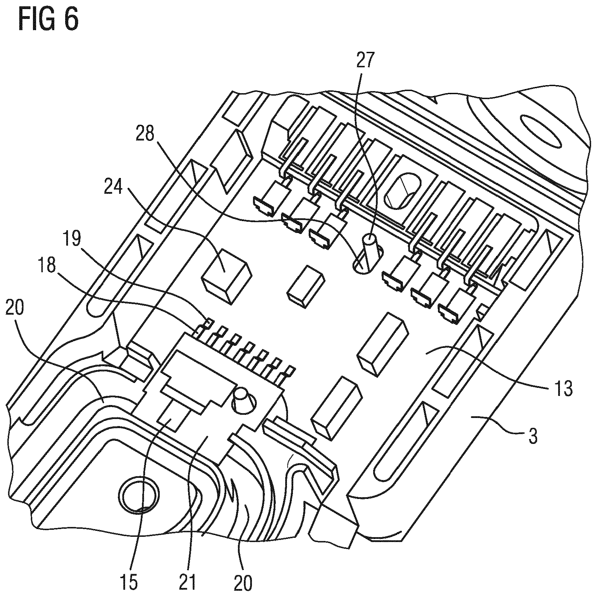

Fig. 6 zeigt den Luftmassenmesser 2 mit dem Gehäuse 3 in das sowohl der Schaltungsträger 13 als auch das Positionierungselement 22 mit dem Luftmassensensorelement 15 eingebaut sind. Gut zu erkennen ist, dass das Positionierungselement 22 in die Positionierungselementaufnahme 23 im Sensorelementträger 21 eingreift. Damit ist das Luftmassensensorelement 15 in zwei räumlichen Dimensionen hochgenau im Luftführungsweg 20 positioniert. Die Positionierung des Luftmassensensorelementes 15 in der dritten räumlichen Dimension im Luftführungsweg 20 erfolgt durch die Auflage des Sensorelementträgers 21 auf der Sensorelementträgerauflage 25 sowie einer zwischen dem Positionierungselement 22 und der Positionierungselementaufnahme 23 vorgesehenen Presspassung. Die Sensorelementträgerauflage 25 ist gut in Fig. 5 zu erkennen und wird in Fig. 6 durch den Sensorelementträger 21 überdeckt. Mit Hilfe des hochpräzise gefertigten Sensorelementträgers 21, des Positionierungselementes 22, der Positionierungselementaufnahme 23 und der Sensorelementträgerauflage 25 ist es möglich, das Luftmassensensorelement 15 in allen drei räumlichen Dimensionen hochpräzise im Luftführungsweg 20 zu positionieren. Diese hochpräzise Positionierung des Luftmassensensorelementes 15 führt zu hochgenauen Messergebnissen des Luftmassenmessers 2. Auch der Schaltungsträger 13 ist mit Hilfe eines Schaltungsträgerpositionierungselementes 27, das am Gehäuse 3 des Luftmassenmessers 2 ausgebildet ist, positioniert. Dazu greift das Schaltungsträgerpositionierungselement 27 in eine Aufnahme 28 für das Schaltungsträgerpositionierungselement 27 ein. Die Aufnahme 28 für das Schaltungsträgerpositionierungselement 27 kann als Bohrung oder, wie in der Fig6 dargestellt, als Langloch im Schaltungsträger 13 ausgebildet sein.

In Fig. 6 ist wiederum zu erkennen, dass das Sensorträgerelement 21 elektrisch mit Hilfe von Anschlussdrähten 18 und Anschlusspatts 19 mit dem Schaltungsträger 13 verbunden ist. Dadurch können die vom Luftmassensensorelement 15 erzeugten Signale elektrisch zum Schaltungsträger 13 und zu den auf dem Schaltungsträger 13 angeordneten elektronischen Bauelementen 24 übertragen werden. Eine direkte mechanische Verbindung zwischen dem Schaltungsträger 13 und dem Sensorelementträger 21 besteht jedoch nicht, was zur hochgenauen Positionierung des Luftmassensensorelementes 15 im Luftführungsweg 20 beiträgt. Alternativ kann eine mechanische Verbindung zwischen zwischen dem Schaltungsträger 13 und dem Sensorelementträger 21 bestehen.

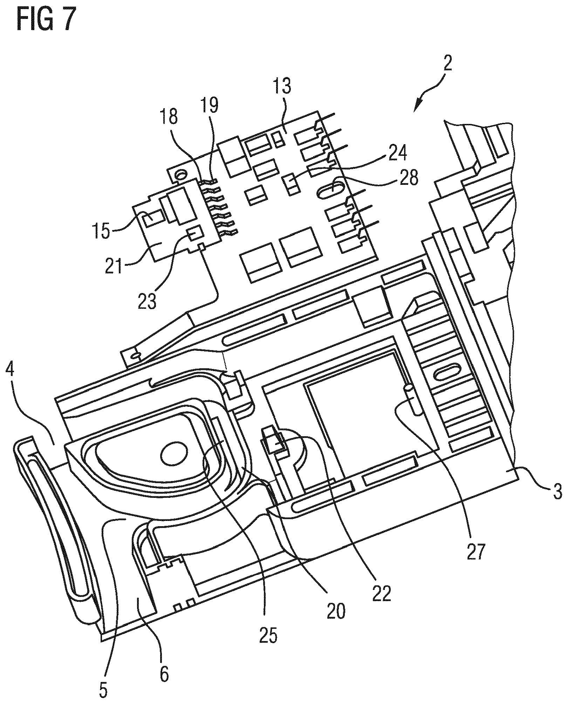

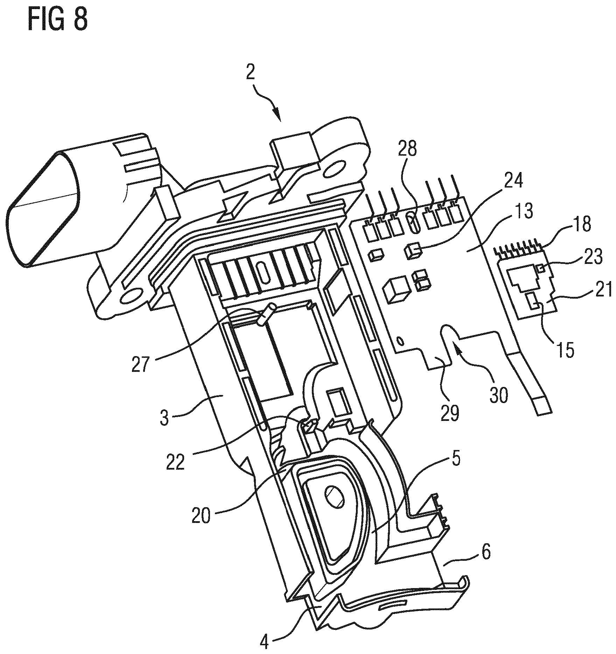

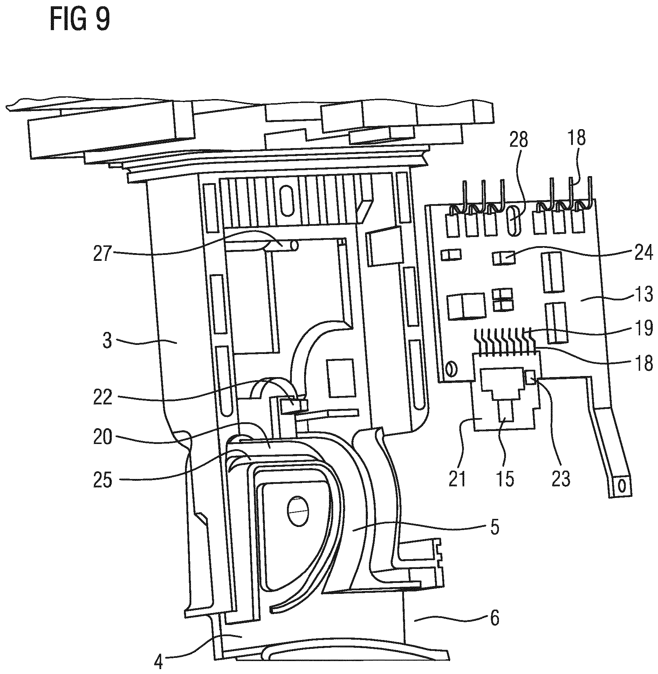

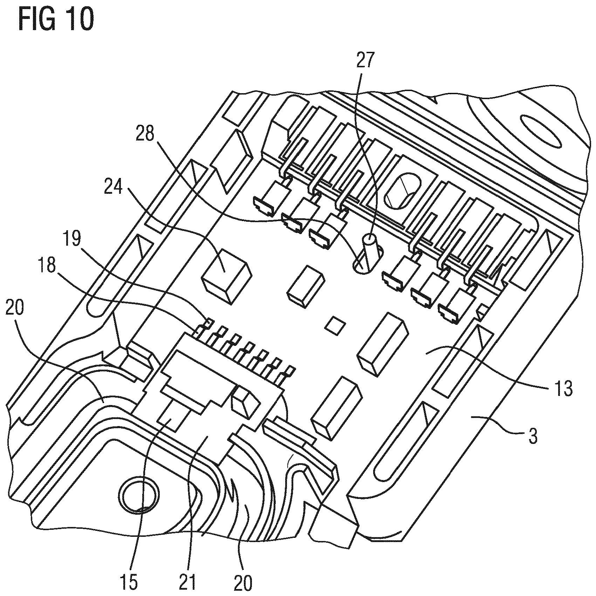

Die Fig. 7 bis 10 zeigen eine Ausgestaltung eines erfindungsgemäßen Luftmassenmessers. Die in den Fig. 7 bis 10 dargestellte Ausgestaltung unterscheidet sich von der in den Fig. 3 bis 6 dargestellten Ausgestaltung dadurch, dass zum einen das Positionierungselement 22 als konischer Dorn mit im Wesentlichen rechteckigem Querschnitt gebildet ist.

Gemäß den Fig. 7 bis 10 ist der Sensorelementträger 21 an dem Schaltungsträger 13 an einem am Schaltungsträger 13 vorgesehenen Befestigungsbereich 29 (siehe Fig. 4) angebracht, beispielsweise mittels Kleben Damit das Positionierungselement 22 mit der Positionierungselementaufnahme 23 in Eingriff gelangen kann, weist der Schaltungsträger 13 eine Ausnehmung 30 auf, durch den sich im montierten Zustand des Sensorelementträgers 21 am Schaltungsträger 13 das Positionierungselement 22 hindurch erstreckt, um mit der Positionierungselementaufnahme 23 einzugreifen.

Wie bereits erläutert, weist das Positionierungselement 22 einen Querschnitt auf, der vorzugsweise dazu ausgebildet ist, eine Verdrehsicherung des Sensorelementträgers 21 relativ zum Schaltungsträger 13 bereitzustellen, wenn sich das Positionierungselement 22 mit der Positionierungselementaufnahme 23 in Eingriff befindet. Bevorzugt besteht bei diesem Eingriff zumindest teilweise eine Presspassung zwischen dem Positionierungselement 22 und der Positionierungselementaufnahme 23. Somit können mittels eines solchen Eingriffs des Positionierungselements 22 mit der Positionierungselementaufnahme 23 sowohl sämtliche translatorischen Freiheitsgrade des Sensorelementträgers 21 relativ zum Schaltungsträger 13 als auch zumindest ein rotatorischer Freiheitsgrad des Sensorelementträgers 21 relativ zum Schaltungsträger 13 gesperrt werden, nämlich die Rotation des Sensorelementträgers 21 relativ zum Schaltungsträger 13 um eine Achse, die im Wesentlichen parallel zur Erstreckungsachse des Positionierungselements 22 verläuft. Insbesondere kann die Presspassung zwischen dem Positionierungselement 22 und der Positionierungselementaufnahme 23 den Sensorelementträger 21 davor bewahren, sich in translatorischer Richtung entlang der Erstreckungsachse des Positionierungselements 22 zu bewegen.

Zur Sperrung des Sensorelementträgers 21 relativ zum Schaltungsträger 13 um die verbleibenden zwei Freiheitsgrade kann das Schaltungsträgerpositionierungselement 27 vorgesehen werden, das bereits in Bezug auf die Fig. 3 bis 6 beschrieben wurde.

In der Ausgestaltung der Fig. 7 bis 10 weist das Positionierungselement 22 eine konische Form auf und hat einen im Wesentlichen rechteckigen Querschnitt. In weiteren erfindungsgemäßen Ausgestaltungen kann das Positionierungselement 22 einen ovalen dreieckigen oder mehreckigen Querschnitt haben Die Positionierungselementaufnahme 23 hat einen Querschnittsform, die der Querschnittsform des Positionierungselements 22 im Wesentlichen derart entspricht, so dass nach dem ein Eingriff bringen des Positionierungselements 22 mit der Positionierungselementaufnahme 23 eine Presspassung dazwischen vorliegt. In diesem montierten Zustand ist außerdem der Sensorelementträger 21 mit der Sensorelementträgerauflage 25 in Kontakt, so dass der Sensorelementträger 21, genauer gesagt das Luftmassensensorelement 15, relativ zum Luftführungsweg 20 positioniert ist.

## Patentansprüche

1. Luftmassenmesser (2) mit einem Gehäuse (3) welches einen Luftführungsweg (20) aufweist in dem ein Luftmassensensorelement (15) angeordnet ist, wobei das Luftmassensensorelement (15) auf einem Sensorelementträger (21) angeordnet ist, der im Gehäuse (3) des Luftmassenmessers (2) angeordnet ist und der mit Anschlussdrähten mit einem Schaltungsträger (13) elektrisch verbunden ist, wobei der Schaltungsträger (13) ebenfalls im Gehäuse (3) des Luftmassenmessers (2) angeordnet ist, **dadurch gekennzeichnet, dass** am Gehäuse (3) des Luftmassenmessers (2) ein konisch ausgebildetes Positionierungselement (22) ausgebildet ist, das in eine Positionierungselementaufnahme (23) eingreift, welche im Sensorelementträger (21) ausgebildet ist, wodurch das Luftmassensensorelement (15) im Luftführungsweg (20) präzise positioniert ist.

2. Luftmassenmesser (2) mit einem Gehäuse (3) welches einen Luftführungsweg (20) aufweist in dem ein Luftmassensensorelement (15) angeordnet ist, wobei das Luftmassensensorelement (15) auf einem Sensorelementträger (21) angeordnet ist, der im Gehäuse (3) des Luftmassenmessers (2) angeordnet ist und der mit Anschlussdrähten mit einem Schaltungsträger (13) elektrisch verbunden ist, wobei der Schaltungsträger (13) ebenfalls im Gehäuse (3) des Luftmassenmessers (2) angeordnet ist, **dadurch gekennzeichnet, dass** am Sensorelementträger (21) ein konisch ausgebildetes Positionierungselement (22) ausgebildet ist, das in einen Positionierungselementaufnahme (23) eingreift, welche im Gehäuse (3) des Luftmassenmessers (2) ausgebildet ist, wodurch das Luftmassensensorelement (15) im Luftführungsweg (20) präzise positioniert ist.

3. Luftmassenmesser (2) nach Anspruch 1, **dadurch gekennzeichnet, dass** das Positionierungselement (22) einstückig mit dem Gehäuse (3) ausgebildet ist .

4. Luftmassenmesser (2) nach Anspruch 2, **dadurch gekennzeichnet, dass** das Positionierungselement (22) einstückig mit dem Sensorelementträger (21) ausgebildet ist.

5. Luftmassenmesser (2) nach Anspruch 1 oder 3,
**dadurch gekennzeichnet, dass** die Positionierungselementaufnahme (23) als Bohrung in dem Sensorelementträger (21) ausgebildet ist.

6. Luftmassenmesser (2) nach Anspruch 2 oder 4,
**dadurch gekennzeichnet, dass** die Positionierungselementaufnahme (23) als Bohrung in dem Gehäuse (3) ausgebildet ist.

7. Luftmassenmesser (2) nach einem der vorhergehenden Ansprüche, wobei das Positionierungselement (22) einen Querschnitt aufweist, der dreieckig, oval, rechteckig oder mehreckig ist.

8. Luftmassenmesser (2) nach einem der vorhergehenden Ansprüche, wobei zwischen dem Positionierungselement (22) und der Positionierungselementaufnahme (23), wenn sich diese im Eingriff befinden, zumindest teilweise eine Presspassung vorgesehen ist.

## Claims

1. Air mass flow meter (2) with a housing (3) which has an air-guiding path (20) in which an air mass sensor element (15) is arranged, wherein the air mass sensor element (15) is arranged on a sensor element carrier (21) which is arranged in the housing (3) of the air mass flow meter (2) and which is electrically connected to a circuit carrier (13) by way of connection wires, wherein the circuit carrier (13) is likewise arranged in the housing (3) of the air mass flow meter (2), **characterized in that**, on the housing (3) of the air mass flow meter (2), there is formed a positioning element (22) of conical form which engages into a positioning element receptacle (23) which is formed in the sensor element carrier (21), as a result of which the air mass sensor element (15) is positioned precisely in the air-guiding path (20).

2. Air mass flow meter (2) with a housing (3) which has an air-guiding path (20) in which an air mass sensor element (15) is arranged, wherein the air mass sensor element (15) is arranged on a sensor element carrier (21) which is arranged in the housing (3) of the air mass flow meter (2) and which is electrically connected to a circuit carrier (13) by way of connection wires, wherein the circuit carrier (13) is likewise arranged in the housing (3) of the air mass flow meter (2), **characterized in that**, on the sensor element carrier (21), there is formed a positioning element (22) of conical form which engages into a positioning element receptacle (23) which is formed in the housing (3) of the air mass flow meter (2), as a result of which the air mass sensor element (15) is positioned precisely in the air-guiding path (20).

3. Air mass flow meter (2) according to Claim 1, **characterized in that** the positioning element (22) is formed integrally with the housing (3).

4. Air mass flow meter (2) according to Claim 2, **characterized in that** the positioning element (22) is formed integrally with the sensor element carrier (21) .

5. Air mass flow meter (2) according to Claim 1 or 3, **characterized in that** the positioning element receptacle (23) is in the form of a bore in the sensor element carrier (21).

6. Air mass flow meter (2) according to Claim 2 or 4, **characterized in that** the positioning element receptacle (23) is in the form of a bore in the housing (3).

7. Air mass flow meter (2) according to one of the preceding claims, wherein the positioning element (22) has a cross section which is triangular, oval, square or polygonal.

8. Air mass flow meter (2) according to one of the preceding claims, wherein a press fit is at least partially provided between the positioning element (22) and the positioning element receptacle (23) when these are in engagement.

## Revendications

1. Appareil de mesure de masse d'air (2) comprenant un boîtier (3) qui comporte un chemin de guidage d'air (20) dans lequel un élément capteur de masse d'air (15) est disposé, l'élément capteur de masse d'air (15) étant disposé sur un support d'élément capteur (21) qui est disposé dans le boîtier (3) de l'appareil de mesure de masse d'air (2) et qui est relié électriquement à un support de circuit (13) par des fils de raccordement, le support de circuit (13) étant également disposé dans le boîtier (3) de l'appareil de mesure de masse d'air (2), **caractérisé en ce qu'**un élément de positionnement conique (22) est formé sur le boîtier (3) de l'appareil de mesure de masse d'air (2) et s'engage dans un logement d'élément de positionnement (23) qui est formé dans le support d'élément capteur (21), ce qui positionne l'élément capteur de masse d'air (15) avec précision dans le chemin de guidage d'air (20).

2. Appareil de mesure de masse d'air (2) comprenant un boîtier (3) qui comporte un chemin de guidage d'air (20) dans lequel un élément capteur de masse d'air (15) est disposé, l'élément capteur de masse d'air (15) étant disposé sur un support d'élément capteur (21) qui est disposé dans le boîtier (3) de l'appareil de mesure de masse d'air (2) et qui est relié électriquement à un support de circuit (13) par des fils de raccordement, le support de circuit (13) étant également disposé dans le boîtier (3) de l'appareil de mesure de masse d'air (2), **caractérisé en ce qu'**un élément de positionnement conique (22) est formé sur le support d'élément capteur (21) et s'engage dans un logement d'élément de positionnement (23) qui est formé dans le boîtier (3) de l'appareil de mesure de masse d'air (2), ce qui positionne l'élément capteur de masse d'air (15) avec précision dans le chemin de guidage d'air (20).

3. Appareil de mesure de masse d'air (2) selon la revendication 1, **caractérisé en ce que** l'élément de positionnement (22) est formé d'une seule pièce avec le boîtier (3).

4. Appareil de mesure de masse d'air (2) selon la revendication 2, **caractérisé en ce que** l'élément de positionnement (22) est formé d'une seule pièce avec le support d'élément capteur (21).

5. Appareil de mesure de masse d'air (2) selon la revendication 1 ou 3, **caractérisé en ce que** le logement d'élément de positionnement (23) est réalisé sous la forme d'un alésage ménagé dans le support d'élément capteur (21).

6. Appareil de mesure de masse d'air (2) selon la revendication 2 ou 4, **caractérisé en ce que** le logement d'élément de positionnement (23) est réalisé sous la forme d'un alésage ménagé dans le boîtier (3).

7. Appareil de mesure de masse d'air (2) selon l'une des revendications précédentes, l'élément de positionnement (22) ayant une section transversale triangulaire, ovale, rectangulaire ou polygonale.

8. Appareil de mesure de masse d'air (2) selon l'une des revendications précédentes, un ajustement serré étant au moins partiellement prévu entre l'élément de positionnement (22) et le logement d'élément de positionnement (23), lorsqu'ils sont en engagement.
